# EUROPEAN PATENT APPLICATION

(11) **EP 4 364 978 A1**
(43) Date of publication of application: **08.05.2024**
(21) Application number: 21948493.8
(22) Date of filing: 24.11.2021
(51) Int. Cl.: B60C 15/04, B60C 19/00

(54) **TIRE**

(30) Priority: 30.06.2021 JP 2021109740
(71) Applicant: BRIDGESTONE CORPORATION, Chuo-ku Tokyo 104-8340 (JP)
(72) Inventor: FUKUDA, Yukimasa, Tokyo 104-8340 (JP)
(74) Representative: Marks & Clerk LLP
(86) International application number: PCT/JP2021/043058
(87) International publication number: WO 2023/276190

(57) **Abstract**

A tire according to the present disclosure comprises a pair of bead cores, and a communication device disposed on the outer side in the tire radial direction relative to the bead core; the bead core comprises a bead wire, and an elastomer coating member having higher electrical resistance than the bead wire and covering the bead wire; and the communication device is disposed at a different position, in the tire circumferential direction, from a winding end of the bead wire.

## Description

### TECHNICAL FIELD

The present disclosure relates to a tire.

### BACKGROUND

It has been conventionally known to install a communication device, such as a sensor that detects the internal condition of the tire, e.g., tire air pressure, or an RF tag with a memory section that can store unique identification information of the tire, etc., on the inner surface of the tire, or to embed such a device inside the tire. For example, a sensor as a communication device can be used to determine the condition of the tire during driving, and various tire information obtained from the memory section of the RF tag as a communication device can be used for maintenance services and other purposes.

Patent document 1 discloses a tire provided with electronic components such as RFID, pressure sensor, temperature sensor, and acceleration sensor in the bead portion.

### CITATION LIST

### Patent Literature

PTL 1: WO2019/054226

### SUMMARY

### (Technical Problem)

In the tire described in the Patent document 1, there is still room for improvement in terms of the communication performance of electronic components.

The purpose of this disclosure is to provide a tire having a configuration that can improve the communication performance of a communication device.

### (Solution to Problem)

The tire as the first aspect of this disclosure comprises a pair of bead cores, and a communication device disposed on the outer side in the tire radial direction relative to the bead core; the bead core comprises a bead wire, and an elastomer coating member having higher electrical resistance than the bead wire and covering the bead wire; and the communication device is disposed at a different position, in the tire circumferential direction, from a winding end of the bead wire.

### (Advantageous Effect)

According to the present disclosure, it is possible to provide a tire having a configuration that can improve the communication performance of a communication device.

### BRIEF DESCRIPTION OF THE DRAWINGS

In the accompanying drawings:
FIG. 1 is a tire cross-sectional view along the tire width direction of the tire as an embodiment of the present disclosure;
FIG.2 is an enlarged tire cross-sectional view of the bead portion illustrated in Figure 1;
FIG.3 illustrates a variation of the placement position of the communication device illustrated in Figure 2;
FIG.4 illustrates another variation of the placement position of the communication device illustrated in Figure 2;
FIG.5A through FIG.5H illustrates a variation of the cross-sectional shape of the bead core illustrated in Figure 2, respectively;
FIG. 6A illustrates an example of the positional relationship of the bead core and the communication device in the tire width direction;
FIG. 6B illustrates an example of the positional relationship of the bead core and the communication device in the tire width direction;
FIG. 6C illustrates an example of the positional relationship of the bead core and the communication device in the tire width direction; and
FIG. 7 is a side view of the tire illustrated in Figure 1.

### DETAILED DESCRIPTION

The following is an illustrative explanation of the embodiment(s) of the tire in accordance with the present disclosure, with reference to the drawings. In each figure, common components are marked with the same reference numerals.

Hereafter, unless otherwise specified, the dimensions, length relationship, positional relationship, etc. of each element shall be measured under the reference condition, in which the pneumatic tire as the tire is mounted on an applicable rim, filled with prescribed internal pressure, and unloaded.

As used herein, the term "applicable rim" refers to the standard rim in the applicable size (Measuring Rim in ETRTO's STANDARDS MANUAL and Design Rim in TRA's YEAR BOOK) as described or as may be described in the future in the industrial standard, which is valid for the region in which the tire is produced and used, such as JATMA YEAR BOOK of JATMA (Japan Automobile Tyre Manufacturers Association) in Japan, STANDARDS MANUAL of ETRTO (The European Tyre and Rim Technical Organization) in Europe, and YEAR BOOK of TRA (The Tire and Rim Association, Inc.) in the United States. That is, the aforementioned "applicable rim" includes current sizes as well as future sizes to be listed in the aforementioned industrial standards. An example of the "size as described in the future" could be the sizes listed as "FUTURE DEVELOPMENTS" in the ETRTO's STANDARDS MANUAL 2013 edition. For sizes not listed in these industrial standards, the term "applicable rim" refers to a rim with a width corresponding to the bead width of the tire.

In addition, the term "prescribed internal pressure" refers to the air pressure (maximum air pressure) corresponding to the maximum load capacity of a single wheel in the applicable size and ply rating, as described in the aforementioned JATMA YEAR BOOK, etc. In the case that the size is not listed in the aforementioned industrial standards, the term "prescribed internal pressure" refers to the air pressure (maximum air pressure) corresponding to the maximum load capacity specified for each vehicle in which the tire is mounted. Further, the term "maximum load" refers to a load corresponding to the tire maximum load capacity of the above-mentioned JATMA or other standards for a tire of the applicable size, or in the case of sizes not listed in the above industrial standards, a load corresponding to the maximum load capacity specified for each vehicle on which the tire is mounted.

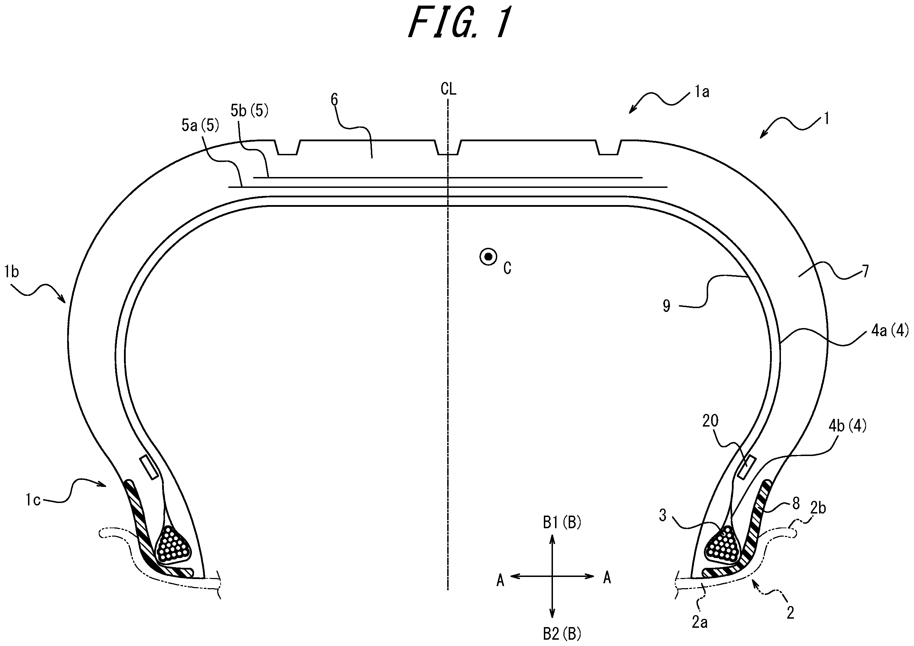

Figure 1 illustrates a pneumatic tire 1 (hereinafter simply referred to as "tire 1") as this embodiment. Figure 1 illustrates a tire cross-sectional view of the tire 1 along the tire width direction. The cross-section along the tire width direction means the cross-section of the tire 1 in a plane parallel to the tire width direction A, including the center axis of the tire 1. Figure 1 illustrates the tire 1 in the reference condition, in which the tire 1 is mounted on the applicable rim 2 indicated in the two-dotted line, filled with the prescribed internal pressure, and unloaded. The tire 1 of this embodiment is symmetrical with respect to the tire equatorial plane CL, but the tire may be asymmetrical with respect to the tire equatorial plane CL. Also, the tire 1 of this embodiment is a passenger vehicle tire, but it may also be a tire for trucks and buses, for example, and the type of vehicle or application to which the tire is applied is not limited. For convenience of explanation, only the external shape of the bead core 3 is illustrated in Figure 1.

### <Applicable rim 2>

The applicable rim 2 illustrated in Figure 1 comprises a rim sheet portion 2a to which a pair of bead portions 1c of the tire 1 described below are mounted on the outer side B1 in the tire radial direction B, and a rim flange portion 2b protruding to the outer side B1 in the tire radial direction B from both ends in the tire width direction A of this rim sheet portion 2a.

### <Tire 1>

As illustrated in Figure 1, the tire 1 comprises a tread portion 1a, a pair of sidewall portions 1b, and a pair of bead portions 1c. The sidewall portions 1b extend from each of two ends in the tire width direction A of the tread portion 1a to the inner side B2 in the tire radial direction B. The bead portions 1c are continuous with the end portion on the inner side B2 in the tire radial direction B of each sidewall portion 1b. The tire 1 of this embodiment is a tubeless radial tire for passenger vehicles. Here, the term "tread portion 1a" refers to the portion of the tire 1 that contacts the ground when the maximum load is applied to the tire 1 in the reference condition. The term "bead portion 1c" refers to the portion, in the tire radial direction B, which includes at least the area where the bead core 3, described below, is located. As in this embodiment, a reinforcing rubber 8 may be provided near the bead core 3. In such a case, the bead portion 1c is the portion, in the tire radial direction B, which includes the area where the bead core 3 is located and the area where the reinforcing rubber 8 is located. The term "sidewall portion 1b" refers the portion between the tread portion 1a and the bead portion 1c. The sidewall portion 1b includes at least a position where the tire 1 has the maximum width.

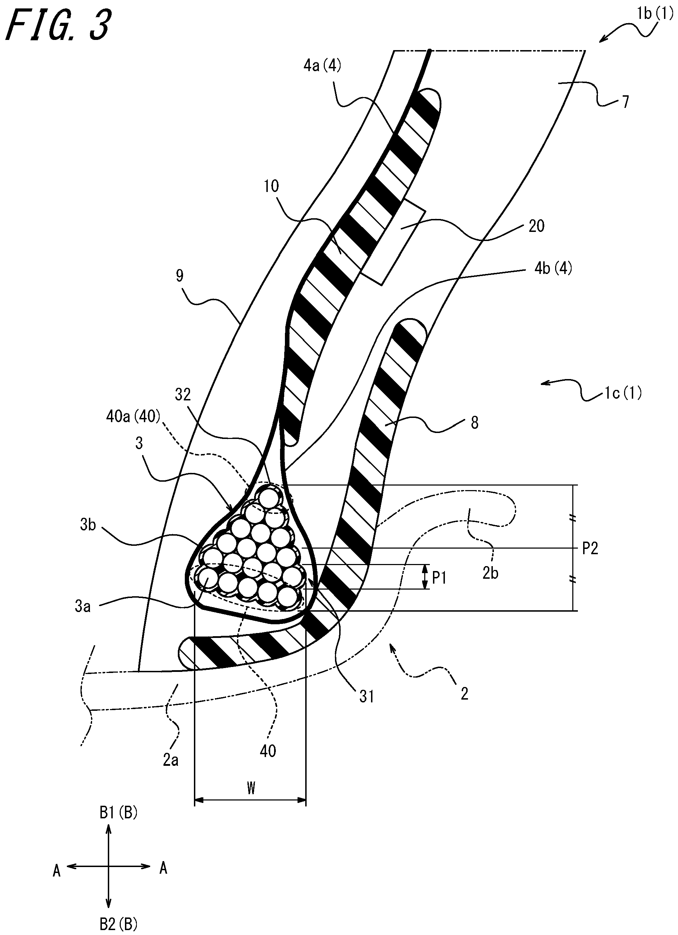

More specifically, the tire 1 of this embodiment comprises a pair of bead cores 3 and a carcass 4 that straddles toroidally between these pair of bead cores 3. Also, the tire 1 of this embodiment comprises a belt 5 consisting of two belt layers 5a and 5b on the outer side B1 in the tire radial direction B of the crown portion of the carcass 4. In addition, the tire 1 of this embodiment comprises a tread rubber 6 on the outer side B 1 in the tire radial direction B of the belt 5. Furthermore, the tire 1 of this embodiment comprises side rubbers 7 on the outer side in the tire width direction A of the side portion of the carcass 4. The outer end in the tire radial direction B of the side rubber 7 is connected to the outer end in the tire width direction A of the tread rubber 6. The inner end in the tire radial direction B of the side rubber 7 is connected to the reinforcing rubber 8 in the bead portion 1c. The reinforcing rubber 8 in this embodiment is clinch that reinforce the bead portion 1c to protect it against contact and pressure with the applicable rim 2, but is not limited to this configuration. The composition of the reinforcing rubber is not limited as long as it reinforce the strength of the bead portion 1c and has a higher hardness than the side rubber 7. Another example of the reinforcing rubber is described below (see Figure 3). In addition, the tire 1 comprises an inner liner 9, forming the inner surface of the tire, on the inner side of the carcass 4.

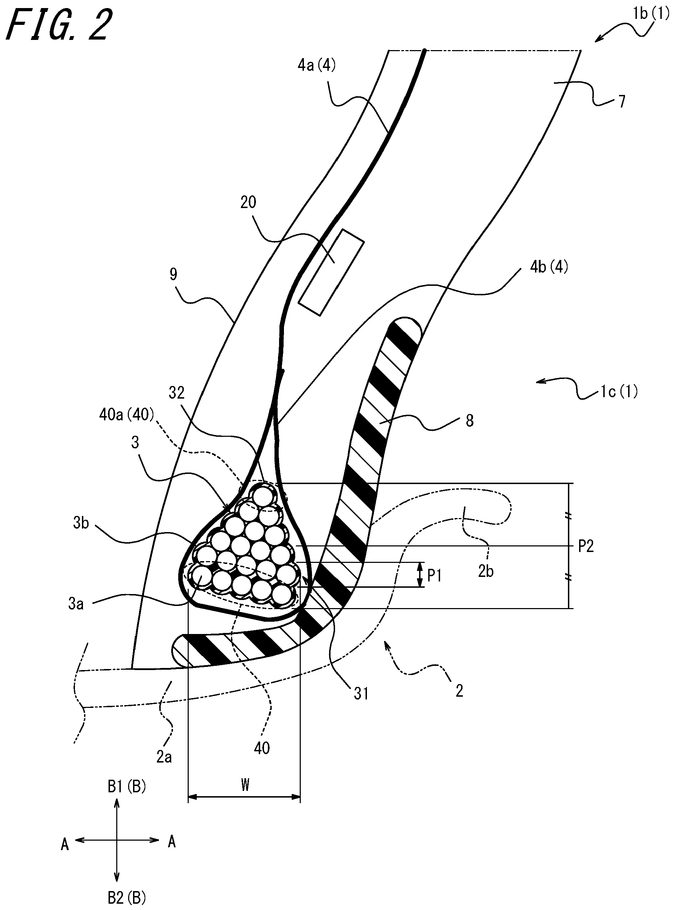

Figure 2 is an enlarged tire cross-sectional view of the bead portion 1c of the tire 1 illustrated in Figure 1. As illustrated in Figure 2, the bead core 3 has a predetermined shape in a tire cross-sectional view along the tire width direction (see Figure 1). Details on the cross-sectional shape of the bead core 3 are described below. As illustrated in Figure 2, the bead core 3 comprises a metal bead wire 3a, and an elastomer coating member 3b having higher electrical resistance than the bead wire 3a and covering the bead wire 3a. The bead wire 3a is formed by a steel cord. The steel cord can, for example, be made of a steel monofilament or a steel-twist wire. The elastomer coating member 3b is made of resin or rubber, for example. Details of the bead core 3 are described below.

As illustrated in Figures 1 and 2, the bead portion 1c of this embodiment does not comprise a bead filler. In other words, the bead portion 1c of this embodiment comprises only the bead core 3 between the body portion 4a and the turn-up portion 4b of the carcass 4, which will be described later. By configuring a bead portion without a bead filler, the bead portion 1c can be made smaller and the tire 1 can be made lighter.

In addition, the bead portion 1c of this embodiment comprise a reinforcing rubber 8. The reinforcing rubber 8 constitutes the outer surface of the bead portion 1c that is in contact with the rim sheet portion 2a and the rim flange portion 2b. The rubber hardness of the reinforcing rubber 8 is higher than that of the side rubber 7. The reinforcing rubber 8 prevents deformation of the bead portion 1c due to external forces received from the applicable rim 2.

As illustrated in Figure 1, the carcass 4 consists of one carcass ply with a radial arrangement (the carcass cords make an angle of 85° or more with respect to the tire circumferential direction C, preferably of 90° with respect to the tire circumferential direction C). However, the carcass 4 may comprise more than one carcass ply. The carcass 4 comprises a body portion 4a that straddles toroidally between the pair of bead cores 3 and turn-up portions 4b that are folded back from the body portion 4a around the bead cores 3. The turn-up portions 4b are folded back from the body portion 4a so that they wrap around the bead cores 3. In this embodiment, the folded ends of the turn-up portions 4b of the carcass 4 are located outer side B1 in the tire radial direction B of the bead core 3 and inner side B2 in the tire radial direction B of the tire maximum width position (a tire radial position where the width in the tire width direction is maximum), but it may be located at another position.

As illustrated in Figure 1, the tire 1 comprises a belt 5 consisting of two belt layers 5a and 5b. The belt layers 5a and 5b of this embodiment are inclined belt layers, in which the belt cords composing them are inclined with respect to the tire circumferential direction C and cross each other between the layers. The number of belt layers in the belt 5 is not limited. The inclination angle of the belt cords in the belt layer is not limited, but can be 35 to 85° with respect to the tire circumferential direction C, for example. Also, one or more reinforcing belt layers may be disposed on the outer side B1 and/or inner side B2 in the tire radial direction B of the inclined belt layer. The reinforcing cords of the reinforcing belt layer are not limited, but can be, for example, extended at an angle of 0 to 5° with respect to the tire circumferential direction C. The width in the tire width direction of each belt layer and each reinforcing belt layer is not limited. Known materials for the belt cords and reinforcing cords can be used as appropriate, and the number of cords and the like can be set as appropriate.

As illustrated in Figure 1, the tire 1 comprises one layer of tread rubber 6. The tread rubber 6 may composed of a plurality of different rubber layers. In this case, a plurality of different rubber layers may be stacked, for example, in the tire radial direction B.

As illustrated in Figure 1, the tire 1 is also comprises one layer of side rubber 7. The side rubber 7 may composed of a plurality of different rubber layers. In this case, a plurality of different rubber layers may be stacked, for example, in the tire width direction A.

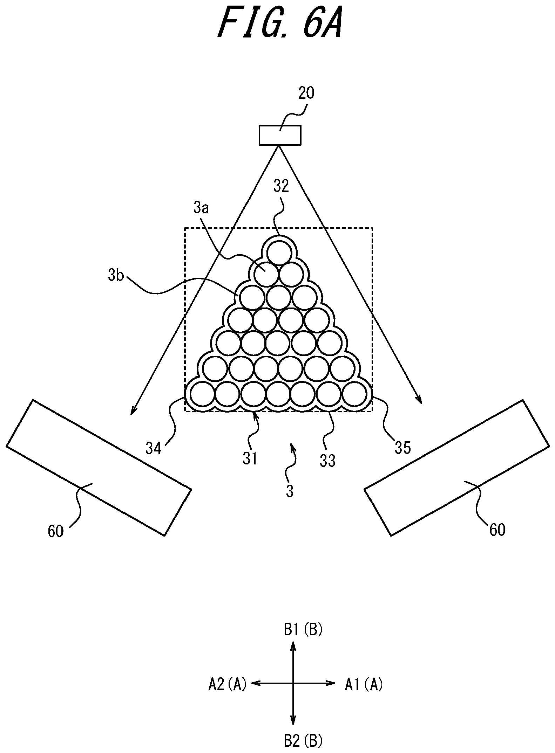

As illustrated in Figures 1 and 2, the tire 1 comprises a communication device 20. The communication device 20 performs wireless communication. The communication device 20 is, for example, an RF tag used in RFID (Radio Frequency Identification). The communication device 20 comprises an IC chip, which constitutes a controller and a storage section, and one or more antennas connected to the IC chip. For example, the communication device 20 may have an overall longitudinal shape with two linear, wavy, or spiral shape antennas extending in opposite directions from the IC chip. The IC chip may also be operated by induced electromotive force generated by electromagnetic waves received by the one or more antennas. In other words, the communication device 20 may be a passive communication device. Alternatively, the communication device 20 may be further provided with a battery, so that to be able to communicate by generating electromagnetic waves using its own power. In other words, the communication device 20 may be an active communication device. The RF tag as the communication device 20 is capable of wireless communication with the reader/writer 60 (see Figures 6A through 6C) as an external device. The reader/writer 60 (see Figures 6A through 6C) receives radio waves or magnetic fields from the RF tag as the communication device 20. The controller of the reader/writer 60 (see Figures 6A through 6C) can obtain the information stored in the storage section of the RF tag by retrieving the received information.

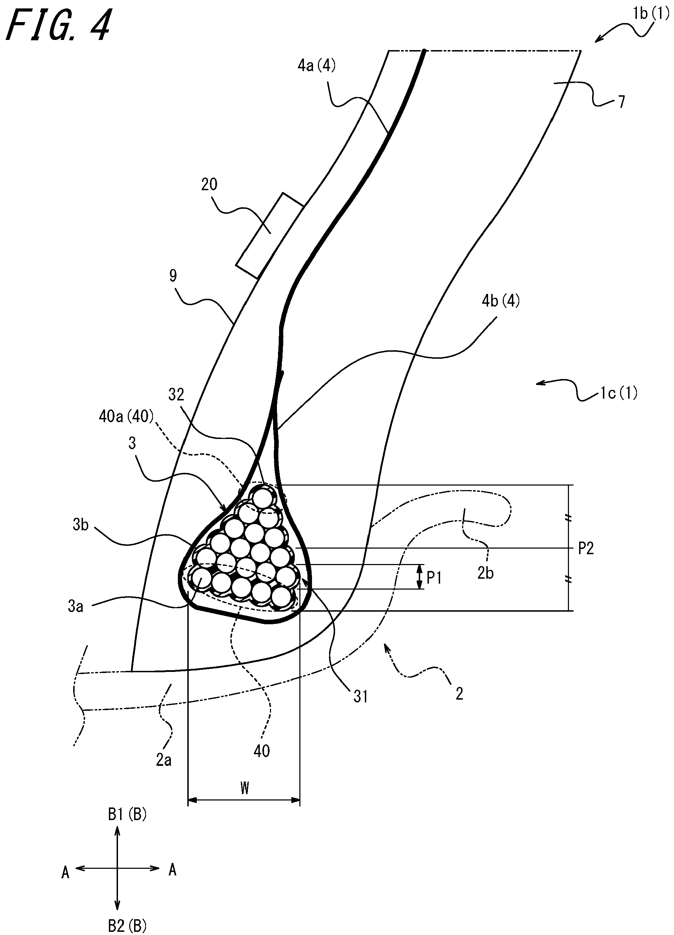

As illustrated in Figures 1 and 2, the communication device 20 is disposed on the outer side B 1 in the tire radial direction B relative to the bead core 3. As illustrated in Figures 1 and 2, the communication device 20 is embedded inside the tire 1, but is not limited to this configuration. The communication device 20 may be installed on the inner surface of the tire 1 (see Figure 4), as described in detail below.

First, the details of the placement position of the communication device 20 will be explained when the communication device 20 is embedded inside the tire 1.

As illustrated in Figures 1 and 2, the communication device 20 of this embodiment is disposed at a position that is outer side B1 in the tire radial direction B than the outer end 32 in the tire radial direction B of the bead core 3 and inner side B2 in the tire radial direction B than the tire maximum width position. When the communication device 20 is disposed in this area, the distance from the highly rigid bead portion 1c is not too far away, and deformation of the communication device 20 due to deformation of the tire 1 can be controlled. This can increase the durability of the communication device 20. Also, the communication device 20 is preferably not disposed in close proximity to the bead core 3, but is disposed at some distance from it. In this way, wireless communication between the communication device 20 and the reader/writer 60 (see Figures 6A through 6C) is less likely to be interfered with by the metal bead core 3.

Furthermore, the communication device 20 is preferably disposed between rubbers having different hardness in the above area in the tire radial direction B. In other words, in a tire cross-sectional view along the tire width direction (see Figures 1 and 2), the communication device 20 of this embodiment is attached directly to the surface of the carcass ply of the carcass 4, but may be embedded in the rubber. For example, the communication device 20 may be disposed between the side rubber 7 and the reinforcing rubber 8, which is harder than the side rubber 7. In this configuration, deformation of the communication device 20 can be further controlled by the reinforcing rubber 8. This allows for greater durability of the communication device 20. Figure 3 illustrates a variation of the placement position of the communication device 20. In the tire 1 illustrated in Figure 3, a reinforcing rubber 10, which covers the outer side in the tire width direction A of the carcass 4 at the outer side B 1 in the tire radial direction B of the bead core 3, is provided. The reinforcing rubber 10 reinforces the stiffness of the bead portion 1c in its collapsing direction. The communication device 20 illustrated in Figure 3 is disposed between the side rubber 7 and the reinforcing rubber 10. In this way, not limited to the reinforcing rubber 8 illustrated in Figures 1 and 2, the communication device 20 may be disposed between the side rubber 7 and another reinforcing rubber 10 that reinforces the bead portion 1c as illustrated in Figure 3.

In addition, in a tire cross-sectional view along the tire width direction (see Figures 1 and 2), the communication device 20 of this embodiment is disposed on the outer side in the tire width direction A relative to the carcass plies of the carcass 4, but it may be disposed on the inner side. Also, the communication device 20 may be disposed between the body portion 4a and the turn-up portions 4b of the carcass 4 in the tire width direction A.

Furthermore, the communication device 20 of this embodiment is disposed at a position that is outer side B1 in the tire radial direction B than the outer end 32 in the tire radial direction B of the bead core 3 and inner side B2 in the tire radial direction B than the tire maximum width position, as described above, but is not limited to this placement position. The communication device 20 may be embedded in the sidewall portion 1b at a position that is outer side B 1 in the tire radial direction B than the tire maximum width position. This arrangement allows the communication device 20 to be configured to communicate not only with external devices outside the sidewall portion 1b, but also with ground-embedded external devices embedded in the ground where the tread portion 1a is grounded.

Furthermore, the communication device 20 may be embedded in the tread portion 1a. The communication device 20 may be embedded in the tread rubber 6, for example. The communication device 20 is preferably embedded, for example, in the rib-shaped land portion of the tread rubber 6 that is divided between adjacent circumferential grooves on the tread surface, and more preferably in the center land portion that intersects the tire equatorial plane CL. This makes it easier to communicate with external devices, even if the external devices are located on either side in the tire width direction A. In addition, by configuring the communication device 20 to be embedded in the land portion, especially in the center land portion, deformation of the communication device 20 can be controlled and the durability of the communication device 20 can be improved compared to when the communication device 20 is embedded in other positions in the tread rubber 6.

However, from the standpoint of durability of the communication device 20, it is particularly preferable that the communication device 20 is disposed at a position that is outer side B1 in the tire radial direction B than the outer end 32 in the tire radial direction B of the bead core 3 and inner side B2 in the tire radial direction B from the tire maximum width position, as in this embodiment.

Furthermore, the communication device 20 may be configured to be installed on the inner surface of the tire 1. In other words, the communication device 20 does not have to be embedded inside the tire 1. Figure 4 illustrates an example of a communication device 20 installed on the inner surface of the tire. The position on the inner surface of the tire where the communication device 20 illustrated in Figure 4 is disposed is a position that is outer side B1 in the tire radial direction B than the outer end 32 in the tire radial direction B of the bead core 3 and inner side B2 in the tire radial direction B than the tire maximum width position. However, the location on the inner surface of the tire where the communication device 20 is disposed is not limited to the location illustrated in Figure 4. The position on the inner surface of the tire where the communication device 20 is disposed may be, in the sidewall portion 1b, the outer side B1 in the tire radial direction B than the tire maximum width portion. In addition, the position on the inner surface of the tire where the communication device 20 is disposed may be on the inner surface of the tread portion 1a. However, from the standpoint of durability of the communication device 20, as illustrated in Figure 4, the position on the inner surface of the tire where the communication device 20 is disposed is particularly preferable: outer side B1 in the tire radial direction B than the outer end 32 in the tire radial direction B of the bead core 3 and inner side B2 in the tire radial direction B than the tire maximum width position.

As mentioned above, from the standpoint of durability of the communication device 20, it is particularly preferable that the communication device 20 be located near the bead portion 1c, regardless of whether the communication device 20 is embedded in the tire 1 or installed on the inner surface of the tire. On the other hand, the metal bead core 3 is embedded in the bead portion 1c. As a result, the communication capability of the communication device 20 with external devices may be interfered with by the bead core 3. Therefore, as illustrated in Figures 1 to 4, the bead core 3 of the tire 1 is configured so that less likely to interfere with the communication of the communication device 20 with the external devices. The details of the configuration of the bead core 3 are described below. The details of the bead core 3 illustrated in Figure 2 will be explained below, but since the bead core 3 illustrated in Figures 3 and 4 are also similar, the detailed explanation of the bead core 3 in Figures 3 and 4 is omitted here.

As illustrated in Figure 2, a position P1 in the tire radial direction B of a maximum width portion 31 of the bead core 3 according to this embodiment, where a core width W in the tire width direction A of the bead core 3 is the largest, is located only on the inner side in the tire radial direction B than an intermediate position P2 in the tire radial direction B of the bead core 3. In short, the bead core 3 is configured so that, in a tire cross-sectional view along the tire width direction (see Figure 2), the outer side B1 in the tire radial direction B is relatively narrower than the inner side B2 in the tire radial direction B. This configuration makes it more difficult for the bead core 3 to interfere with the communication between the communication device 20 located in the outer side B1 in the tire radial direction B relative to the bead core 3 and external devices, as compared to a bead core where the outer side B1 in the tire radial direction B is not relatively narrower than the inner side B2 in the tire radial direction B. Therefore, the communication between the communication device 20 and external devices can be improved. In other words, the communication performance of the communication device 20 can be improved.

In addition, as illustrated in Figure 2, the bead core 3 comprises a bead wire 3a, and an elastomer coating member 3b having higher electrical resistance than the bead wire 3a and covering the bead wire 3a. With this configuration, in a tire cross-sectional view along the tire width direction (see Figure 2), a rubber or resin elastomer coating member 3b, which is non-metallic and has excellent radio wave permeability, is interposed between the metal bead wires 3a. Therefore, compared to a configuration in which such a coating member 3b is not interposed between the bead wires 3a, radio waves can easily pass between the bead wires 3a, thereby improving the communication of the communication device 20 with external devices. That is, the communication performance of the communication device 20 can be improved.

Also, as in the present embodiment, the center of gravity of the bead core 3 in a tire cross-sectional view along the tire width direction (see Figure 2) is preferably located on the inner side B2 in the tire radial direction B than the intermediate position P2 in the tire radial direction B. In this way, the strength of the bead core 3 on the inner side B2 in the tire radial direction B can be secured, and its fixation to the applicable rim 2 can be improved.

In addition, in a tire cross-sectional view along the tire width direction (See Figure 2), the bead core 3 is composed of a plurality of wire layers 40, each including one or more of the bead wires 3a, stacked from inner side B2 to outer side B1 in the tire radial direction B. In this embodiment, each of the wire layers 40 is formed by one bead wire 3a coated by the coating member 3b, which is wound around the tire while shifting its position in the tire width direction A in each lap. In other words, in this embodiment, each of the wire layers including bead wires 3a arranged in the tire width direction A is formed by one bead wire 3a, which is wound around the tire while shifting its position in the tire width direction A in each lap. Also, in this embodiment, one bead wire 3a covered by the coating member 3b is wound around the tire so that the wire layers 40 are stacked from the inner side B2 to the outer side B1 in the tire radial direction B, thereby achieving the stacking of the wire layers 40 in the tire radial direction B. However, the wire layers 40 may, for example, be composed of a strip of multiple bead wires 3a arranged in parallel and collectively covered by the coating member 3b. If the wire layers 40 are composed of strips, the stacking of the wire layers 40 in the tire radial direction B can be achieved by winding these strips and stacking them in the tire radial direction B.

The maximum width portion 31 of the bead core 3 is located only in the inner side B2 in the tire radial direction B than the intermediate position P2, as described above. Therefore, in the bead core 3, relatively more bead wires 3a are wound around the inner side B2 than around the outer side B1 in the tire radial direction B. Therefore, the overall length of the bead wire 3a that is wound around to form the bead core 3 can be shortened compared to a configuration in which the maximum width portion of the bead core is located on the outer side B1 in the tire radial direction B than the intermediate position P2. This allows the bead core 3 to be made lighter, and the overall weight increase of the tire 1 due to the addition of the communication device 20 can be controlled.

Here, as illustrated in Figure 2, among the plurality of wire layers 40 stacked in this embodiment, the outermost wire layer 40a, which is located at the outermost B1 in the tire radial direction B of the bead core 3, contains only one of the bead wires 3a. In other words, in a tire cross-sectional view along the tire width direction (see Figure 2), the outermost wire layer 40a comprises only one bead wire 3a. With this configuration, the outer end 32 in the tire radial direction B of the bead core 3 is configured to be narrower, including only one bead wire 3a, in the tire cross-sectional view in the tire width direction (see Figure 2). In this way, compared to a configuration in which the outer end 32 in the tire radial direction B of the bead core 3 includes a plurality of bead wires 3a in a tire cross-sectional view along the tire width direction (see Figure 2), the communication between the communication device 20, which is located on the outer side B1 in the tire radial direction B relative to the bead core 3, and external devices is less likely to be interfered with by the bead core 3. This can improve the communication between the communication device 20 and external devices. In other words, the communication performance of the communication device 20 can be improved. The wire layer 40 located in the maximum width portion 31 of the bead core 3 described above is the layer that contains the most bead wires 3a arranged in parallel, among all the wire layers 40.

Furthermore, as illustrated in Figure 2, in this embodiment, the core width W of the bead core 3 is gradually decreasing from the maximum width portion 31, toward outer side B1 in the tire radial direction B, to its outer end 32 in the tire radial direction B. With this configuration, no large irregularities are formed on the surface of the bead core 3 from the position of the maximum width portion 31 to the position of the outer end 32. Therefore, compared to a configuration in which the core width W does not gradually decrease from the maximum width portion 31 to the outer end 32, the communication between the communication device 20, which is located in the outer side B1 in the tire radial direction B relative to the bead core 3, and the external devices is less likely to be interfered with by the bead core 3. Therefore, the communication between the communication device 20 and the external devices can be improved. In other words, the communication performance of the communication device 20 can be improved.

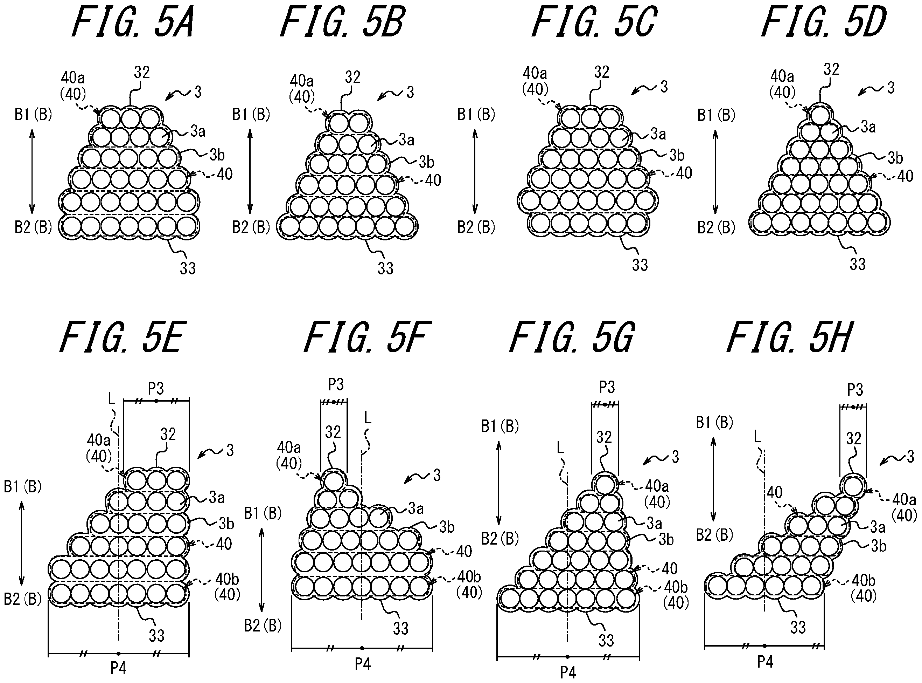

Figures 5A through 5B illustrate variations of the shape of the bead core 3 illustrated in Figures 2 through 4. Figures 5A through 5H illustrate the shape of the bead core 3 as a variation, in a tire cross-sectional view along the tire width direction.

The bead core 3 illustrated in Figure 5A differs from the bead core 3 illustrated in Figures 2 through 4 in that the outermost wire layer 40a, which constitutes the outer end 32 in the tire radial direction B, includes a plurality of bead wires 3a.

The bead core 3 illustrated in Figure 5B differs from the bead core 3 illustrated in Figure 5A in that the number of bead wires 3a in the wire layer 40 gradually decreases from the inner side B2 to the outer side B1 in the tire radial direction B. In this way, the number of bead wires 3a in each wire layer 40 is not limited as long as the maximum width portion 31 (see Figure 2, etc.) of the bead core 3 is located only on the inner side B2 in the tire radial direction B than the intermediate position P2 (see Figure. 2, etc.) in the tire radial direction B. Thus, as illustrated in Figure 5C, the bead core 3 may include a portion, where the number of bead wires 3a in each wire layer 40 is gradually decreasing from the outer side B1 to the inner side B2 in the tire radial direction B.

In the bead core 3 illustrated in Figure 5D, as in the bead core in Figure 5B, the number of bead wires 3a in the wire layer 40 gradually decreases from the inner side B2 to the outer side B 1 in the tire radial direction B. The bead core 3 illustrated in Figure 5D differs from the bead core 3 illustrated in Figure 5B in that the outermost wire layer 40a, which constitutes the outer end 32 in the tire radial direction B, contains only one bead wire 3a. As described above, this configuration makes it more difficult for the bead core 3 to inhibit communication between the communication device 20, which is located on the outer side B1 in the tire radial direction B relative to the bead core 3, and external devices, compared to a configuration where the outermost wire layer 40a includes multiple bead wires 3a.

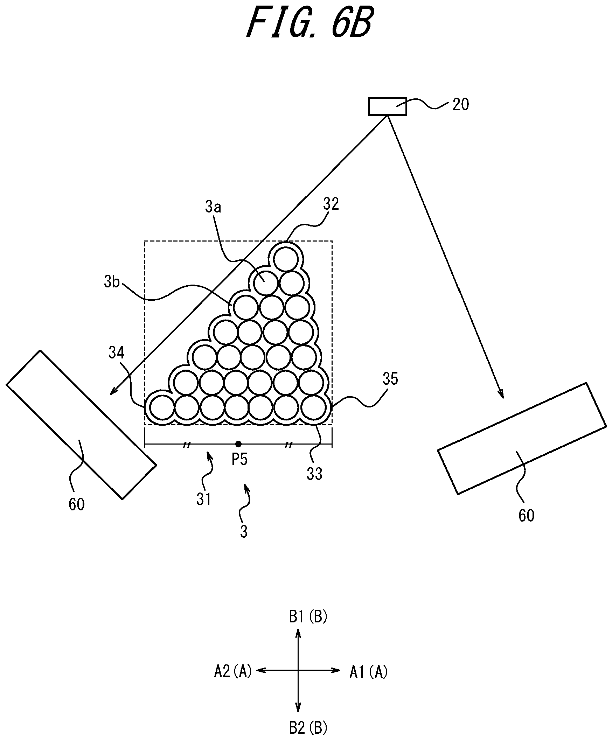

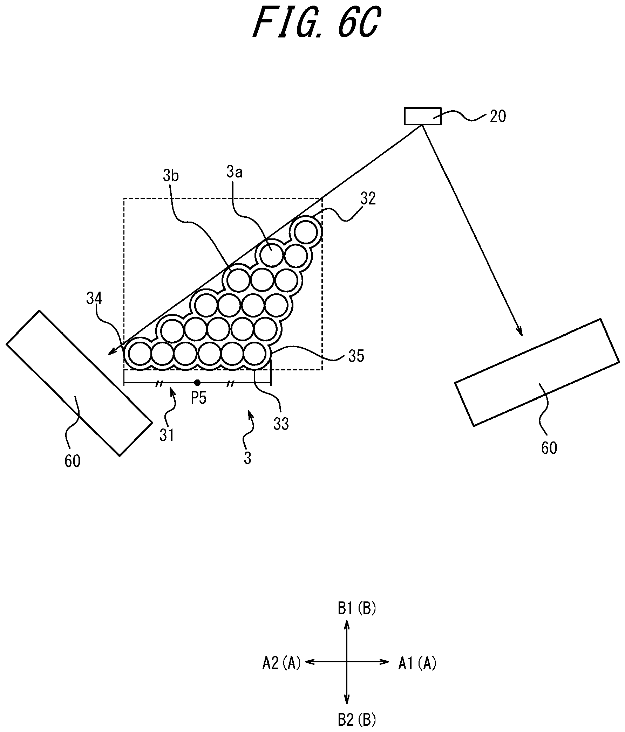

Also, as illustrated in Figures 5E through 5H, in a tire cross-sectional view along the tire width direction, the intermediate position P3 of the outermost wire layer 40a, which constitutes the outer end 32 in the tire radial direction B of the bead core 3, may be eccentric to one side with respect to the intermediate line L at the intermediate position P4 of the innermost wire layer 40b, which constitutes the inner end 33 in the tire radial direction B of the bead core 3. This eccentric shape of the bead core 3 is beneficial to use in relation to the placement position of the communication device 20. Details on this point are described below (see Figures 6B and 6C).

Next, refer to Figures 6A through 6C to explain the positional relationship, in the tire width direction A, of the bead core 3 and the communication device 20. Figures 6A through 6C illustrate the positional relationship between the bead core 3 and the communication device 20 in a tire cross-sectional view along the tire width direction. All of the communication devices 20 illustrated in Figures 6A through 6C are located on the outer side B1 in the tire radial direction B of the bead core 3. In Figures 6A through 6C, the outer side in the tire width direction A (the direction away from the tire equatorial plane CL in Figure 1) is indicated by "A1" and the inner side in the tire width direction A (the direction closer to the tire equatorial plane CL in Figure 1) is indicated by "A2".

Figure 6A illustrates an example in which the RF tag as the communication device 20 is disposed at the position in the tire width direction A, overlapping with the bead core 3 in the tire radial direction B. In short, Figure 6A illustrates the state in which at least part of the communication device 20 is located within the area in the tire width direction A where the bead core 3 is located. Figure 6A also depicts the bead core 3 illustrated in Figure 5D.

In the case of the positional relationship of the communication device 20 and the bead core 3 illustrated in Figure 6A, it is preferable, in a tire cross-sectional view along the tire width direction, that the outer end 32 in the tire radial direction B of the bead core 3 is located, in the tire width direction A, outer side A1 of an inner end 34 in the tire width direction A of the maximum width portion 31 and inner side A2 of an outer end 35 in the tire width direction A of the maximum width portion 31. With such a configuration of the bead core 3, whether the external devices (reader/writer 60 in this embodiment) are located outer side A1 of the bead core 3 in the tire width direction A (reader/writer 60 on the right side in Figure 6A) or inner side A2 of the bead core 3 in the tire width direction A (reader/writer 60 on the left side in Figure 6A), compared to the case where the bead core 3 does not comprise the above configuration (e.g., the configuration illustrated by the dashed frame in Figure 6A), the communication between the communication device 20 and the external devices is less likely to be interfered with (see arrows in Figure 6A). In addition, the bead core 3 also comprises an elastomer coating member 3b that covers the bead wire 3a, as described above. Therefore, in a tire cross-sectional view along the tire width direction (see Figure 6A), wireless communication with the communication device 20 through the coating member 3b is possible even when the external devices are on the opposite side of the communication device 20 across the bead core 3. As a result, the situation where the communication device 20 becomes unable to communicate with the external devices is less likely to occur.

As described above, when the communication device 20 is disposed at the position in the tire width direction A, overlapping with the bead core 3 in the tire radial direction B, it is preferable, in a tire cross-sectional view along the tire width direction, that the outer end 32 in the tire radial direction B of the bead core 3 is located, in the tire width direction A, outer side A1 of an inner end 34 in the tire width direction A of the maximum width portion 31 and inner side A2 of an outer end 35 in the tire width direction A of the maximum width portion 31. This makes it easier to ensure the communication between the communication device 20 and the external devices, regardless of the position of the external devices, such as a reader/writer 60, for example, in the tire width direction A.

Figure 6B illustrates an example where the RF tag as the communication device 20 is disposed at the position in the tire width direction A, not overlapping with the bead core 3 in the tire radial direction B. In short, Figure 6B illustrates the state in which the communication device 20 is not located within the area in the tire width direction A where the bead core 3 is located. Figure 6B also depicts the bead core 3 illustrated in Figure 5G.

Specifically, in Figure 6B, the communication device 20 is disposed on the outer side A1 in the tire width direction A relative to the bead core 3. In the case of this positional relationship between the communication device 20 and the bead core 3 illustrated in Figure 6B, the outer end 32 in the tire radial direction B of the bead core 3 is preferably located, in the tire width direction A, on the outer side A1 in the tire width direction A than the intermediate position P5 in the tire width direction A of the maximum width portion 31.

Conversely, the communication device 20 may be disposed on the inner side A2 in the tire width direction A relative to the bead core 3. In such a case, the outer end 32 of the bead core 3 in the tire radial direction B is preferably located, in the tire width direction A2, on the inner side A2 in the tire width direction A than the intermediate position P5 in the tire width direction A of the maximum width portion 31.

If the outer end 32 has a constant width instead of apex in a tire cross-sectional view along the tire width direction, the intermediate position of the outer end 32 in the tire width direction A may be located on the inner side or outer side in the tire width direction A than the intermediate position P5.

In the case the communication device 20 and the bead core 3 has the positional relationship illustrated in Figure 6B, by configuring the bead core 3 in such as describe above, even when the external devices (reader/writer 60 in this embodiment) are on the opposite side of the bead core from the communication device 20 in the tire width direction A, compared to the case where the bead core 3 does not comprise the above configuration (e.g., the configuration illustrated by the dashed frame in Figure 6B), communication between the communication device 20 and the external devices is less likely to be interfered with (see arrows in Figure 6B). In addition, the bead core 3 also comprises an elastomer coating member 3b that covers the bead wire 3a, as described above. Therefore, in a tire cross-sectional view along the tire width direction (see Figure BA), wireless communication with the communication device 20 through the coating member 3b is possible even when the external devices are on the opposite side of the communication device 20 across the bead core 3. As a result, the situation where the communication device 20 becomes unable to communicate with the external devices is less likely to occur.

As described above, when the communication device 20 is disposed on one of the inner side A2 and outer side A1 in the tire width direction A relative to the bead core 3 in a tire cross-sectional view along the tire width direction, the outer end 32 of the bead core 3 in the tire radial direction B is preferably located, in the tire width direction A, on one side in the tire width direction A (side with the communication device 20) from the intermediate position P5 in the tire width direction A of the maximum width portion 31. This makes it easier to ensure the communication between the communication device 20 and the external devices, regardless of the position of the external devices, such as a reader/writer 60, for example, in the tire width direction A.

In a tire cross-sectional view along the tire width direction, the center of gravity of the bead core 3 is also preferably located on one side in the tire width direction A (the side with the communication device 20) from the intermediate position P5 in the tire width direction A of the maximum width portion 31.

Figure 6C is similar to Figure 6B. However, in Figure 6C, the outer end 32 in the tire radial direction B of the bead core 3 is located, in the tire width direction A, on the outer side A1 in the tire width direction A than the outer end 35 in the tire width direction A of the maximum width portion 31. The bead core 3, even in this configuration, can achieve the same effect as in Figure 6B.

The communication device 20 may be disposed on the inner side A2 in the tire width direction A relative to the bead core 3. In such a case, the outer end 32 in the tire radial direction B of the bead core 3 may be located, in the tire width direction A, on the inner side A2 in the tire width direction A than the inner end 34 in the tire width direction A of the tire maximum width portion 31.

However, the configuration illustrated in Figure 6B is preferable in terms of suppressing the collapse of the bead core 3. Specifically, the case in which the communication device 20 is disposed on the outer side A1 in the tire width direction A relative to the bead core 3 is described first. In such a case, the outer end 32 in the tire radial direction B of the bead core 3 is preferably located on the outer side A1 in the tire width direction A, than the intermediate position P5 in the tire width direction A of the maximum width portion 31. Furthermore, as illustrated in Figure 6B, the outer end 32 in the tire radial direction B of the bead core 3 is preferably located, in the tire width direction A, on the inner side A2 in the tire width direction A, than the outer end 35 in the tire width direction A of the maximum width portion 31. Next, the case in which the communication device 20 is disposed on the inner side A2 in the tire width direction A relative to the bead core 3 is described. In such a case, the outer end 32 in the tire radial direction B of the bead core 3 is preferably located on the inner side A2 in the tire widthwise direction A, than the intermediate position P5 in the tire width direction A of the maximum width portion 31. Furthermore, the outer end 32 in tire radial direction B of the bead core 3 is preferably located, in the tire width direction A, on the outer side A1 in the tire width direction A, than the inner end 34 in tire width direction A of the maximum width portion 31. In this way, the position of the outer end 32 is prevented from being too biased to one side in the tire width direction A, and the collapse of the bead core 3 into the tire width direction A can be controlled. The center of gravity of the bead core 3 is preferably disposed similar to the outer end 32 described above.

In Figures 6A through 6C, the maximum width portion 31 is composed of an innermost wire layer 40b (see Figures 5G, 5H, etc.) that constitutes the inner end 33 in the tire radial direction B of the bead core 3, but may be composed of another wire layer 40 (see Figures 5A through 5H).

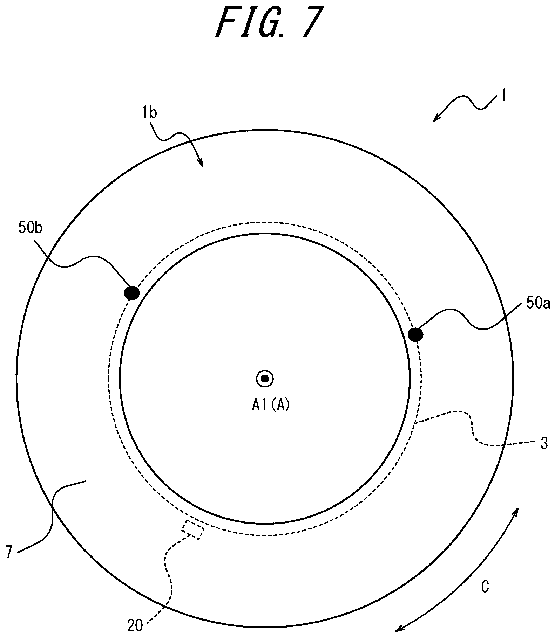

Referring now to Figure 7, the positional relationship of the bead core 3 and the communication device 20 in the tire circumferential direction C is explained. Figure 7 illustrates a side view of the tire 1 viewed from the sidewall portion 1b. In Figure 7, for convenience of explanation, the positions of the bead core 3 and the communication device 20, which are embedded inside the tire 1, are indicated by dashed lines.

In Figure 7, positions of the winding ends 50a and 50b of the bead wires 3a of the bead core 3 (see Figure 2, etc.) are illustrated. The winding end 50a is a winding end of the bead wire 3a that constitutes the bead core 3 in the tire side portion on one side in the tire width direction A (e.g., outside when mounted on the vehicle), where the communication device 20 is disposed in the vicinity. The winding end 50b is a winding end of the bead wire 3a that constitutes the bead core 3 in the tire side portion on the other side in the tire width direction A (e.g., inside when mounted on the vehicle), where the communication device 20 is not disposed in the vicinity.

As illustrated in Figure 7, the communication device 20 is disposed at a different position in the tire circumferential direction C, than at least one of the winding ends 50a and 50b of the bead wires 3a. The sectional shape of the bead core 3 in the vicinity of the winding ends 50a and 50b of the bead core 3 is more easily deformed and collapsed than the rest of the bead core 3 in the tire circumferential direction C. Therefore, the separation distance between bead wires 3a, for example, may unintentionally be partially larger in the vicinity of the winding ends 50a and 50b of the bead core 3 than in other parts. In such cases, the intended communication path between the communication device 20 and the external devices can be blocked by the bead wires 3a. Therefore, if the communication device 20 is located near the above-mentioned winding ends 50a and 50b in the tire circumferential direction C, the communication between the communication device 20 and the external devices, such as the reader/writer 60 illustrated in Figures 6A through 6C, may be affected. By disposing the communication device 20 at a different position in the tire circumferential direction C than at least one of the winding ends 50a and 50b of the bead wire 3a, it is possible to prevent at least one of the winding ends 50a and 50b from adversely affecting the communication between the communication device 20 and the external devices. In other words, the communication performance of the communication device 20 can be improved.

In particular, the communication device 20 is preferably disposed at least at a different position, in the tire circumferential direction C, from the winding end 50a of the bead wires 3a of the bead core 3 in the tire side portion where this communication device 20 is embedded or installed. In this way, the possibility of the winding ends 50a and 50b adversely affecting the communication between the communication device 20 and the external devices can be reduced.

Furthermore, as illustrated in Figure 7, it is more preferable that the communication device 20 is disposed at a different position, in the tire circumferential direction C, from either of the winding ends 50a or 50b of the bead wire 3a. In this way, it is more preferable to make the position in the tire circumferential direction C of the communication device 20 different, not only from the winding end 50a in the tire side portion on one side in the tire width direction A, where the communication device 20 is embedded, but also from the winding end 50b in the tire side portion on the other side in the tire width direction A, where the communication device 20 is not embedded. By having a configuration like this, it is easier to ensure communication between the communication device 20 and the external devices, regardless of whether the external devices are disposed on either side of the tire 1 in the tire width direction A. In other words, the possibility of the winding ends 50A and 50B adversely affecting the communication between the communication device 20 and the external devices can be further reduced. Furthermore, the position in tire circumferential direction C where the winding ends 50a and 50b are provided tends to be heavier than the surrounding position in tire circumferential direction C due to the presence of bead tape and other materials. The position in tire circumferential direction C where the communication device 20 is disposed also tends to be heavier than the surrounding position in the tire circumferential direction C. Therefore, by differentiating the position of the communication device 20 in the tire circumferential direction C from the positions of the winding ends 50a and 50b in the tire circumferential direction C, the weight balance in the tire circumferential direction C of the tire 1 can be improved and the uniformity in the tire circumferential direction C can be enhanced.

The tire pertaining to the present disclosure is not limited to the specific configurations provided in the embodiments and variations described above, and various variations, changes, and combinations are possible as long as they do not depart from the scope of the claims.

### INDUSTRIAL APPLICABILITY

This disclosure relates to a tire.

### REFERENCE SIGNS LIST

- 1: Tire
- 1a: Tread portion
- 1b: Sidewall portion
- 1c: Bead portion
- 2: Applicable rim
- 2a: Rim seat portion
- 2b: Rim flange portion
- 3: Bead core
- 3a: Bead wire
- 3b: Coating member
- 4: Carcass
- 4a: Body portion
- 4b: Turn-up portion
- 5: Belt
- 5a, 5b: Belt layer
- 6: Tread rubber
- 7: Side rubber
- 8: Reinforcing rubber
- 9: Inner liner
- 10: Reinforcing rubber
- 20: Communication device
- 31: Maximum width portion
- 32: Outer end in the tire radial direction
- 33: Inner end in the tire radial direction
- 34: Inner end in the tire width direction
- 35: Outer end in the tire width direction
- 40: Wire layer
- 40a: Outermost wire layer
- 40b: Innermost wire layer
- 50a, 50b: Winding end
- 60: Reader/writer
- A: Tire width direction
- A1: Outer side in the tire width direction
- A2: Inner side in the tire width direction
- B: Tire radial direction
- B1: Outer side in the tire radial direction
- B2: Inner side in the tire radial direction
- C: Tire circumferential direction
- CL: Tire equatorial plane
- L: Intermediate line at intermediate position of innermost wire layer
- P2: Intermediate position in the tire radial direction of bead core
- P3: Center position of outermost wire layer
- P4: Intermediate position of innermost wire layer
- P5: Center position in the tire width direction of maximum width portion
- W: Core width

## Claims

1. A tire comprising a pair of bead cores, and
a communication device disposed on the outer side in the tire radial direction relative to the bead core;
the bead core comprises a bead wire, and an elastomer coating member having higher electrical resistance than the bead wire and covering the bead wire; and
the communication device is disposed at a different position, in the tire circumferential direction, from a winding end of the bead wire.

2. The tire according to claim 1, wherein a tire radial position of a maximum width portion, where a core width in the tire width direction of the bead core is the largest, is located only on the inner side in the tire radial direction than an intermediate position in the tire radial direction of the bead core.

3. The tire according to claim 2, wherein, in a tire cross-sectional view along the tire width direction, the center of gravity of the bead core is located on the inner side in the tire radial direction than the intermediate position.

4. The tire according to claim 2 or 3, wherein, in a tire cross-sectional view along the tire width direction, the bead core is composed of a plurality of wire layers, each including one or more of the bead wires, stacked from inner side to outer side in the tire radial direction, and
an outermost wire layer, which is located at the outermost in the tire radial direction of the bead core among the plurality of wire layers, contains only one of the bead wires.

5. The tire according to any one of claims 2 to 4, wherein the core width of the bead core is gradually decreasing from the maximum width portion, toward outer side in the tire radial direction, to its outer end in the tire radial direction.

6. The tire according to any one of claims 2 to 5, wherein, in a tire cross-sectional view along the tire width direction, the communication device is disposed at a tire widthwise position which overlaps with the bead core in the tire radial direction.

7. The tire according to claim 6, wherein, in a tire cross-sectional view along the tire width direction, an outer end in the tire radial direction of the bead core is located, in the tire width direction, outer side than an inner end in the tire width direction of the maximum width portion and inner side than an outer end in the tire width direction of the maximum width portion.

8. The tire according to any one of claims 2 to 5, wherein, in a tire cross-sectional view along the tire width direction, the communication device is disposed at a tire widthwise position which does not overlap with the bead core in the tire radial direction.

9. The tire according to claim 8, wherein, in a tire cross-sectional view along the tire width direction, the communication device is disposed on one side of inner side and outer side in the tire width direction relative to the bead core, and
an outer end in the tire radial direction of the bead core is located on the one side in the tire width direction from an intermediate position in the tire width direction of the maximum width portion.

10. The tire according to claim 9, wherein the outer end in the tire radial direction of the bead core is located on the other side in the tire width direction than the end of the one side in the tire width direction of the maximum width position.
